(19) Europäisches Patentamt / European Patent Office / Office européen des brevets

(11) **EP 2 882 170 B1**

(12) **EUROPEAN PATENT SPECIFICATION**

(45) Date of publication and mention
of the grant of the patent:
**11.01.2017 Bulletin 2017/02**

(51) Int Cl.:
*H04M 1/03* (2006.01)     *H04M 1/60* (2006.01)
*H04R 3/00* (2006.01)

(21) Application number: **14192761.6**

(22) Date of filing: **12.11.2014**

(54) **Audio information processing method and apparatus**

Audioinformationsverarbeitungsverfahren und Gerät

Méthode et appareil de traitement d'information audio

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2013 CN 201310656703**

(43) Date of publication of application:
**10.06.2015 Bulletin 2015/24**

(73) Proprietor: **Huawei Technologies Co., Ltd.
Longgang District
Shenzhen, Guangdong 518129 (CN)**

(72) Inventor: **Li, Haiting
Shenzhen, Guangdong 518129 (CN)**

(74) Representative: **Thun, Clemens
Mitscherlich PartmbB
Patent- und Rechtsanwälte
Sonnenstraße 33
80331 München (DE)**

(56) References cited:
**US-A1- 2004 192 421    US-A1- 2011 164 105
US-A1- 2011 317 041    US-A1- 2012 062 729**

**Description**

**TECHNICAL FIELD**

The present application relates to the information processing field, and in particular, to an audio information processing method and apparatus.

**BACKGROUND**

With the continuous advancement of science and technology, an electronic product has an increasing number of functions. At present, an overwhelming majority of portable electronic devices have an audio information collecting function and can output collected audio information. A mobile phone is an example. When a mobile phone is used to perform operations such as making a call and recording a video, an audio information collecting function of the mobile phone is applied.

For example, US 2012/0062729A1 refers to a computing device, which can analyze image or video information to determine a relative position of an active user. The computing device can optimize audio or video data capture based at least in part upon the relative location. The device can capture audio using one or more microphones pointing toward the relative location of the active user, and can use other microphones to determine audio from other sources to be removed from the captured audio. If video data is being captured, a video capture element can be adjusted to focus primarily on the active user. The position of the user can be monitored so the audio and video data capture can be adjusted accordingly.

Further, US 2011/0164105 A1 refers to a handheld communication device used to capture video streams and generate a multiplexed video stream. The handheld communication device has at least two cameras facing in two opposite directions. The handheld communication device receives a first video stream and a second video stream simultaneously from the two cameras. The handheld communication device detects a speech activity of a person captured in the video streams. The speech activity may be detected from direction of sound or lip movement of the person. Based on the detection, the handheld communication device automatically switches between the first video stream and the second video stream to generate a multiplexed video stream. The multiplexed video stream interleaves segments of the first video stream and segments of the second video stream. Other embodiments are also described and claimed.

Further, US 2011/0317041 A1 refers to an electronic apparatus that has a rear-side and a front-side, a first microphone that generates a first signal, and a second microphone that generates a second signal. An automated balance controller generates a balancing signal based on an imaging signal. A processor processes the first and second signals to generate at least one beamformed audio signal, where an audio level difference between a front-side gain and a rear-side gain of the beamformed audio signal is controlled during processing based on the balancing signal.

However, in the prior art, when an electronic device is used to collect audio information, basically, the audio information collected by the electronic device is directly output or saved without being further processed, which causes that in the audio information collected by the electronic device, volume of noise or an interfering sound source may be higher than volume of a target sound source.

For example, when a mobile phone is used to record a video, because a user who performs shooting is close to the mobile phone, a sound, made by the user, in a recorded video is usually louder than a sound made by a shot object, which causes that in the audio information collected by the electronic device, the volume of the target sound source is lower than the volume of the noise or the interfering sound source.

**SUMMARY**

An objective of the present application is to provide an audio information processing method and apparatus, which can solve, by processing audio information collected by an audio collecting unit, a problem that volume of a sound source is lower than volume of noise.

To achieve the foregoing objective, the present application provides the following solutions:

According to a first possible implementation manner of a first aspect of the present application, the present application provides an audio information processing method, where the method is applied to an electronic device; the electronic device has at least a front-facing camera being a camera provided on a same side as a display of the electronic device and a rear-facing camera provided on a side opposite to the side of the electronic device on which the display is provided; a camera in a started state from the front-facing camera and the rear-facing camera is a first camera; there is at least one audio collecting unit on a side on which the front-facing camera is located, and there is at least one audio collecting unit on a side on which the rear-facing camera is located; when the front-facing camera is the first camera, the audio collecting unit on the side on which the front-facing camera is located is configured as a first audio collecting unit, and the audio collecting unit on the side on which the rear-facing camera is located is configured as a second audio collecting unit; when the rear-facing camera is the first camera, the audio collecting unit on the side on which the rear-facing camera is located is configured as a first audio collecting unit, and the audio collecting unit on the side on which the front-facing camera is located is configured as a second audio collecting unit; and the method includes:

determining the first camera;
acquiring first audio information collected by the first audio collecting unit;
acquiring second audio information collected by the second audio collecting unit;
processing the first audio information and the second audio information to obtain third audio information, where for the third audio information, a gain of a sound signal from a shooting direction of the first camera is a first gain, for the third audio information, a gain of a sound signal from an opposite direction of the shooting direction is a second gain, and the first gain is greater than the second gain; and
outputting the third audio information, wherein both the first audio collecting unit and the second audio collecting unit are omnidirectional audio collecting units, and the processing the first audio information and the second audio information to obtain third audio information specifically comprises: processing, in a first processing mode, the first audio information and the second audio information to obtain fourth audio information; processing, in a second processing mode, the first audio information and the second audio information to obtain fifth audio information; wherein in the first processing mode, a beam of an overall collecting unit comprising the first audio collecting unit and the second audio collecting unit is a first beam, and in the second processing mode, a beam of an overall collecting unit comprising the first audio collecting unit and the second audio collecting unit is a second beam, wherein the first beam and the second beam have different directions; and synthesizing, according to a preset weighting coefficient, the fourth audio information and the fifth audio information to obtain the third audio information.

According to a first possible implementation manner of a third aspect of the present application, the present application provides an audio information processing apparatus, where the apparatus is applied to an electronic device; the electronic device has at least a front-facing camera being a camera provided on a same side as a display of the electronic device and a rear-facing camera provided on a side opposite to the side on which the display is provided; a camera in a started state from the front-facing camera and the rear-facing camera is a first camera; there is at least one audio collecting unit on a side on which the front-facing camera is located, and there is at least one audio collecting unit on a side on which the rear-facing camera is located; when the front-facing camera is the first camera, the audio collecting unit on the side on which the front-facing camera is located is configured as a first audio collecting unit, and the audio collecting unit on the side on which the rear-facing camera is located is configured as a second audio collecting unit; when the rear-facing camera is the first camera, the audio collecting unit on the side on which the rear-facing camera is located is configured as a first audio collecting unit, and the audio collecting unit on the side on which the front-facing camera is located is configured as a second audio collecting unit; and the apparatus includes:

a determining unit, configured to determine the first camera;
an acquiring unit, configured to acquire first audio information collected by the first audio collecting unit; and further configured to acquire second audio information collected by the second audio collecting unit;
a processing unit, configured to process the first audio information and the second audio information to obtain third audio information, where for the third audio information, a gain of a sound signal coming from a shooting direction of the first camera is a first gain, for the third audio information, a gain of a sound signal coming from an opposite direction of the shooting direction is a second gain, and the first gain is greater than the second gain; and
an output unit, configured to output the third audio information, wherein both the first audio collecting unit and the second audio collecting unit are omnidirectional audio collecting units, and the processing unit is specifically configured to: process, in a first processing mode, the first audio information and the second audio information to obtain fourth audio information; process, in a second processing mode, the first audio information and the second audio information to obtain fifth audio information; wherein in the first processing mode, a beam of an overall collecting unit comprising the first audio collecting unit and the second audio collecting unit is a first beam, and in the second processing mode, a beam of an overall collecting unit comprising the first audio collecting unit and the second audio collecting unit is a second beam, wherein the first beam and the second beam have different directions; and synthesize, according to a preset weighting coefficient, the fourth audio information and the fifth audio information to obtain the third audio information.

According to a first possible implementation manner of a fourth aspect of the present application, the present application provides another audio information processing apparatus, where the apparatus is applied to an electronic device; the electronic device has at least a front-facing camera being a camera provided on a same side as a display of the electronic device and a rear-facing camera provided on a side opposite to the side on which the display is provided; a camera in a started state from the front-facing camera and the rear-facing camera is a first camera; there is at least one audio collecting unit on a side on which the front-facing camera is located, and there is at least one audio collecting unit on a side on which the rear-facing camera is located; when the front-facing camera is the first camera, the audio collecting unit on the side on which the front-facing camera is located is configured as a first audio collecting unit, and the audio collecting unit on the side on which the rear-facing camera is located is configured as a second audio collecting unit; when the rear-facing camera is the first camera, the audio collecting unit on the side on which the rear-facing camera is located is configured as a first audio collecting unit, and the audio collecting unit on the side on which the front-facing camera is located is configured as a second audio collecting unit, and the electronic device further comprises the audio information processing apparatus mentioned above.

According to specific embodiments provided in the present application, the present application discloses the following technical effects:

According to an audio information processing method or apparatus disclosed in the present application, a first camera is determined; audio information collected by the first audio collecting unit and the second audio collecting unit is processed to obtain third audio information, where for the third audio information, a gain of a sound signal coming from a shooting direction of the camera is a first gain with a larger gain value, and a gain of a sound signal coming from an opposite direction of the shooting direction is a second gain with a smaller gain value, so that when an electronic device is used for video shooting and audio collecting at the same time, volume of a target sound source in a video shooting direction can be increased, and volume of noise or an interfering sound source in an opposite direction of the video shooting direction can be decreased; therefore, in synchronously output audio information, volume of a target sound source in a final video image is higher than volume of noise or an interfering sound source outside the video image.

## BRIEF DESCRIPTION OF DRAWINGS

To describe the technical solutions in the embodiments of the present application or in the prior art more clearly, the following briefly introduces the accompanying drawings required for describing the embodiments. Apparently, the accompanying drawings in the following description show merely some embodiments of the present application, and a person of ordinary skill in the art may still derive other drawings from these accompanying drawings without creative efforts.

FIG. 1 is a flowchart of Embodiment 1 of an audio information processing method according to the present application;

FIG. 2 is a schematic diagram of beam directionality of a first audio collecting unit and a second audio collecting unit in Embodiment 2 and Embodiment 3 of an audio information processing method according to the present application;

FIG. 3 is a flowchart of Embodiment 2 of an audio information processing method according to the present application;

FIG. 4 is a schematic diagram of beam directionality of an overall collecting unit including a first audio collecting unit and a second audio collecting unit after a differential array processing technique is used in Embodiment 2 of an audio information processing method according to the present application;

FIG. 5 is a flowchart of Embodiment 3 of an audio information processing method according to the present application;

FIG. 6 is a schematic diagram of beam directionality of a first beam of an overall collecting unit including a first audio collecting unit and a second audio collecting unit after a first processing mode is used in Embodiment 3 of an audio information processing method according to the present application;

FIG. 7 is a schematic diagram of beam directionality of a second beam of an overall collecting unit including a first audio collecting unit and a second audio collecting unit after a second processing mode is used in Embodiment 3 of an audio information processing method according to the present application;

FIG. 8 is a schematic diagram of first beam directionality of a first audio collecting unit in Embodiment 4 of an audio information processing method according to the present application;

FIG. 9 is a schematic diagram of second beam directionality of a first audio collecting unit in Embodiment 4 of an audio information processing method according to the present application;

FIG. 10 is a schematic diagram of beam directionality of a second audio collecting unit in Embodiment 4 of an audio information processing method according to the present application;

FIG. 11 is a flowchart of Embodiment 4 of an audio information processing method according to the present application;

FIG. 12 is a flowchart of Embodiment 1 of another audio information processing method according to the present application;

FIG. 13 is a flowchart of Embodiment 1 of an audio information processing apparatus according to the present application;

FIG. 14 is a structural diagram of Embodiment 1 of another audio information processing apparatus according to the present application;

FIG. 15 is a structural diagram of a computing node according to the present application;

FIG. 16 is a front schematic structural diagram of an electronic device according to an embodiment of the present application;
FIG. 17 is a rear schematic structural diagram of an electronic device according to an embodiment of the present application;
FIG. 18 is a front schematic structural diagram of an electronic device according to an embodiment of the present application; and
FIG. 19 is a rear schematic structural diagram of an electronic device according to an embodiment of the present application.

## DESCRIPTION OF EMBODIMENTS

The following clearly describes the technical solutions in the embodiments of the present application with reference to the accompanying drawings in the embodiments of the present application. Apparently, the described embodiments are merely a part rather than all of the embodiments of the present application. All other embodiments obtained by a person of ordinary skill in the art based on the embodiments of the present application without creative efforts shall fall within the protection scope of the present application.

To make the foregoing objectives, characteristics, and advantages of the present application clearer and more comprehensible, the following describes the present application in more detail with reference to the accompanying drawings and specific embodiments.

An audio information processing method of the present application is applied to an electronic device, where the electronic device has at least a front-facing camera and a rear-facing camera; a camera in a started state from the front-facing camera and the rear-facing camera is a first camera; and there is at least one first audio collecting unit on one side on which the first camera is located, and there is at least one second audio collecting unit on the other side.

The electronic device may be a mobile phone, a tablet computer, a digital camera, a digital video recorder, or the like. The first camera may be the front-facing camera, and may also be the rear-facing camera. The audio collecting unit may be a microphone. The electronic device of the present application has at least two audio collecting units. There is at least one audio collecting unit on the side on which the front-facing camera is located, and there is at least one audio collecting unit on the side on which the rear-facing camera is located; when the front-facing camera is the first camera, the audio collecting unit on the side on which the front-facing camera is located is configured as a first audio collecting unit, and the audio collecting unit on the side on which the rear-facing camera is located is configured as a second audio collecting unit; and when the rear-facing camera is the first camera, the audio collecting unit on the side on which the rear-facing camera is located is configured as a first audio collecting unit, and the audio collecting unit on the side on which the front-facing camera is located is configured as a second audio collecting unit.

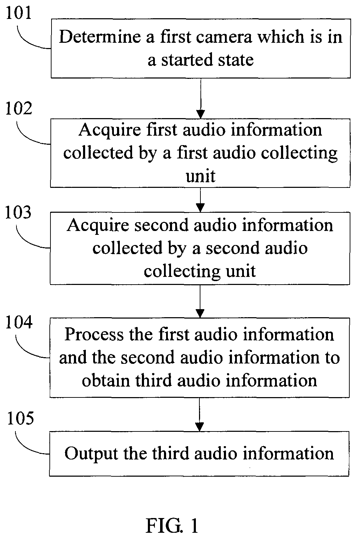

FIG. 1 is a flowchart of Embodiment 1 of an audio information processing method according to the present application. As shown in FIG. 1, the method may include the following steps:

Step 101: Determine the first camera.

Generally, the camera of the electronic device is not in the started state all the time. When it is required to use the camera to shoot an image, the camera of the electronic device may be started.

When the camera is started, it may be determined, according to a signal change of a circuit of the camera, whether the camera in the started state is the front-facing camera or the rear-facing camera. Certainly, the front-facing camera and the rear-facing camera may also be in the started state at the same time.

It should be noted that a button used to indicate a state of the camera may also be specifically configured for the electronic device. After a user performs an operation on the button, it can be determined that the camera is in the started state. It should further be noted that on some special occasions, after performing an operation on the button, the user may only switch the state of the camera, and does not necessarily really start the camera at a physical level.

It should further be noted that when the electronic device has multiple cameras, it can be determined in this step that a camera in the started state is the first camera.

For example, the electronic device has a front-facing camera and a rear-facing camera. If the front-facing camera is in the started state, it can be determined in this step that the front-facing camera is the first camera, the first audio collecting unit is on a side on which the front-facing camera of the electronic device is located, and the second audio collecting unit is on a side on which the rear-facing camera of the electronic device is located. If the rear-facing camera is in the started state, it can be determined in this step that the rear-facing camera is the first camera, the first audio collecting unit is on the side on which the rear-facing camera of the electronic device is located, and the second audio collecting unit is on the side on which the front-facing camera of the electronic device is located.

If both the front-facing camera and the rear-facing camera are in the started state, for audio information collected in real time by all audio collecting units of the electronic device, the audio information processing method of this embodiment may be performed by using the front-facing camera as the first camera, so as to obtain one piece of third audio information with the front-facing camera used as the first camera; meanwhile, the audio information processing method of this embodiment is performed by using the rear-facing camera as the first camera, so as to obtain one piece of third audio information with the rear-facing camera used as the first camera; and these two pieces of third audio information are output at the same time. When the front-facing camera is used as the first camera, the first audio collecting unit is on the side on which the front-facing camera of the electronic device is located, and the second audio collecting unit is on the side on which the rear-facing camera of the electronic device is located. When the rear-facing camera is used as the first camera, the first audio collecting unit is on the side on which the rear-facing camera of the electronic device is located, and the second audio collecting unit is on the side on which the front-facing camera of the electronic device is located.

Step 102: Acquire first audio information collected by the first audio collecting unit.

When the first audio collecting unit is powered on and works properly, audio information collected by the first audio collecting unit is the first audio information.

Step 103: Acquire second audio information collected by the second audio collecting unit.

When the second audio collecting unit is powered on and works properly, audio information collected by the second audio collecting unit is the second audio information.

Step 104: Process the first audio information and the second audio information to obtain third audio information, where for the third audio information, a gain of a sound signal coming from a shooting direction of the first camera is a first gain; for the third audio information, a gain of a sound signal coming from an opposite direction of the shooting direction is a second gain; and the first gain is greater than the second gain.

By using a sound processing technique, different adjustments may be made to audio information from different directions, so that adjusted audio information has different gains in different directions. After being processed, audio information collected from a direction in which there is a larger gain has higher volume; and after being processed, audio information collected from a direction in which there is a smaller gain has lower volume.

When the camera is the front-facing camera, the shooting direction of the camera is a direction which the front of the electronic device faces. When the camera is the rear-facing camera, the shooting direction of the camera is a direction which the rear of the electronic device faces.

When the camera is used for shooting, audio information, such as a person's voice, that the electronic device needs to collect generally comes from a shooting range. Therefore, the gain of the sound signal coming from the shooting direction of the camera is adjusted to be the first gain with a larger gain value, which can increase volume of the audio information from the shooting range, making volume of a speaker's voice expected to be recorded higher. In addition, the gain of the sound signal coming from the opposite direction of the shooting direction is adjusted to be the second gain with a smaller gain value, which can suppress volume of audio information coming from a non-shooting range, making volume of noise or an interfering sound source in a background lower.

Step 105: Output the third audio information.

The outputting the third audio information may be that the third audio information is output to a video file for storing, where the video file is recorded by the electronic device; and may also be that the third audio information is directly output and transmitted to an electronic device which is communicating with the electronic device for direct real-time play.

In conclusion, according to the method of this embodiment, a first camera is determined; audio information collected by the first audio collecting unit and the second audio collecting unit is processed to obtain third audio information, where for the third audio information, a gain of a sound signal coming from a shooting direction of the first camera is a first gain with a larger gain value, and a gain of a sound signal coming from an opposite direction of the shooting direction is a second gain with a smaller gain value, so that when an electronic device is used for video shooting and audio collecting at the same time, volume of a sound source in a video shooting direction can be increased, and volume of noise or an interfering sound source in an opposite direction of the video shooting direction can be decreased; therefore, in synchronously output audio information, volume of a target sound source in a final video image is higher than volume of noise or an interfering sound source outside the video image.

The following describes a method of the present application with reference to a physical attribute of an audio collecting unit and a position in which an audio collecting unit is disposed in an electronic device.

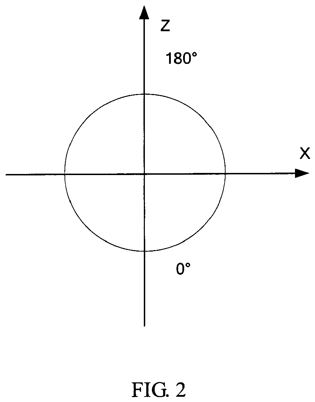

FIG. 2 is a schematic diagram of beam directionality of a first audio collecting unit and a second audio collecting unit in Embodiment 2 and Embodiment 3 of an audio information processing method according to the present application. In the schematic diagram of the beam directionality, a closed curve without coordinate axes is referred to as a beam. A distance between a point on the beam and an origin represents a gain value, picked up by an audio collecting unit, of a sound in a direction of a connecting line of the point and the origin.

In FIG. 2, both the first audio collecting unit and the second audio collecting unit are omnidirectional audio collecting units. The so-called "omnidirectional" refers to that picked-up gains of audio information from all directions are the same.

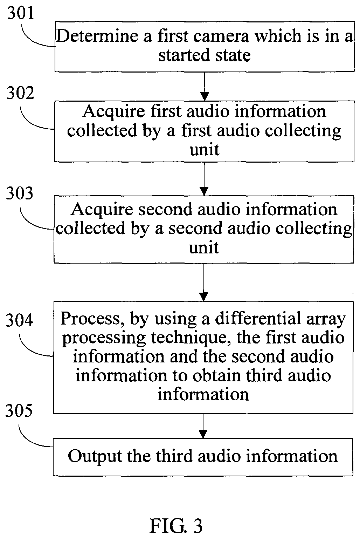

FIG. 3 is a flowchart of Embodiment 2 of an audio information processing method according to the present application. As shown in FIG. 3, the method may include the following steps:

Step 301: Determine the first camera which is in the started state.
Step 302: Acquire first audio information collected by the first audio collecting unit.
Step 303: Acquire second audio information collected by the second audio collecting unit.
Step 304: Process, by using a differential array processing technique, the first audio information and the second audio information to obtain a third audio information.

After the differential array processing technique is used, a beam of an overall collecting unit including the first audio collecting unit and the second audio collecting unit is a cardioid, and

a direction of a maximum value of the cardioid is the same as a shooting direction, and a direction of a minimum value is the same as an opposite direction of the shooting direction.

In differential array processing, it is required to design a weighting coefficient of a differential beamformer according to responses at different configured angles and a position relationship between microphones, and then store the designed weighting coefficient.

It is assumed that N is the number of microphones included in a microphone array, and in principle, degrees of responses at M angles may be configured, where $M \leq N$, M is a positive integer; the $i^{th}$ angle is $\theta_i$; and according to a periodicity of the cosine function, $\theta_i$ may be any angle. If a response at the $i^{th}$ $\beta_i$, i = 1,2,...,M angle is , a formula to calculate the weighting coefficient by using a method for designing a differential beamforming weighting coefficient is as follows:

$$h(\omega) = D^{-1}(\omega, \theta)\beta$$

A formula of a steering array $D(\omega,\theta)$ is as follows:

$$D(\omega, \theta) = \begin{bmatrix} d^H(\omega, \cos\theta_1) \\ d^H(\omega, \cos\theta_2) \\ \vdots \\ d^H(\omega, \cos\theta_M) \end{bmatrix},$$

$$d(\omega, \cos\theta_i) = [e^{-j\omega\tau_1\cos\theta_i} \quad e^{-j\omega\tau_2\cos\theta_i} \quad \cdots \quad e^{-j\omega\tau_N\cos\theta_i}]^T, i = 1,2,...,M$$

A formula of a response matrix $\beta$ is as follows:

$$\beta = [\beta_1 \quad \beta_2 \quad \cdots \quad \beta_M]^T.$$

A superscript -1 in the formula denotes an inverse operation, and a superscript T denotes a transpose operation.

$\tau_k = \dfrac{d_k}{c}$ where k=1,2,...,N, c is a sound velocity and generally may be 342m/s or 340m/s; $d_k$ is a distance between the $k^{th}$ microphone and a configured origin position of the array. Generally, the origin position of the array is a geometrical center of the array, and a position of a microphone (for example, the first microphone) in the array may also be used as the origin.

When the number of microphones included in the microphone array is two, in designing of the differential beamforming weighting coefficient, if a 0° direction of an axis Z is used as the shooting direction, that is, a maximum response point, the response is 1; and if a 180° direction of the axis Z is used as the opposite direction of the shooting direction, that is, a zero point, the response is 0. In this case, the steering array becomes:

$$D(\omega,\theta) = \begin{bmatrix} d^H(\omega, 1) \\ d^H(\omega, -1) \end{bmatrix}$$

;

and the response matrix $\beta$ becomes: $\beta = [1\ 0]$. After the first audio and second audio information is collected, the first audio and second audio information is transformed to a frequency domain. If it is assumed that first audio after the transformation to the frequency domain is $X_1(\omega)$, and second audio after the transformation to the frequency domain is $X_2(\omega)$, $X(\omega) = [X_1(\omega)\ X_2(\omega)]^T$; after the differential array processing, third audio $Y(k)$ in the frequency domain is obtained, where $Y(\omega) = h^T(\omega)X(\omega)$, and third audio in a time domain is obtained after a time-frequency transformation.

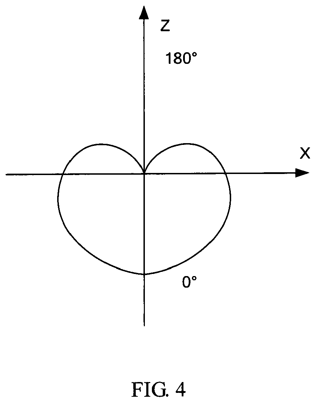

FIG. 4 is a schematic diagram of beam directionality of an overall collecting unit including a first audio collecting unit and a second audio collecting unit after a differential array processing technique is used in Embodiment 2 of an audio information processing method according to the present application.

In FIG. 4, the 0° direction of the axis Z is the shooting direction, and the 180° direction of the axis Z is the opposite direction of the shooting direction. It can be seen that a direction of a maximum value of a cardioid beam is exactly the 0° direction of the axis Z, and a direction of a minimum value is exactly the 180° direction of the axis Z.

The differential array processing technique is a method for adjusting beam directionality of an audio collecting unit in the prior art, and details are not repeatedly described herein.

Step 305: Output the third audio information.

In conclusion, a specific method for processing, when both a first audio collecting unit and a second audio collecting unit are omnidirectional audio collecting units, the first audio information and the second audio information to obtain the third audio information is provided in this embodiment.

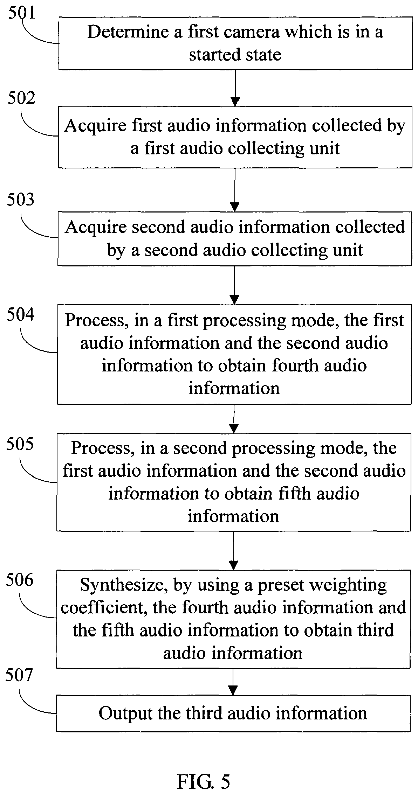

FIG. 5 is a flowchart of Embodiment 3 of an audio information processing method according to the present application. As shown in FIG. 5, the method may include the following steps:

Step 501: Determine the first camera which is in the started state.
Step 502: Acquire first audio information collected by the first audio collecting unit.
Step 503: Acquire second audio information collected by the second audio collecting unit.
Step 504: Process, in a first processing mode, the first audio information and the second audio information to obtain fourth audio information.
Step 505: Process, in a second processing mode, the first audio information and the second audio information to obtain fifth audio information.

In the first processing mode, a beam of an overall collecting unit including the first audio collecting unit and the second audio collecting unit is a first beam; and
in the second processing mode, a beam of an overall collecting unit including the first audio collecting unit and the second audio collecting unit is a second beam, where the first beam and the second beam have different directions.

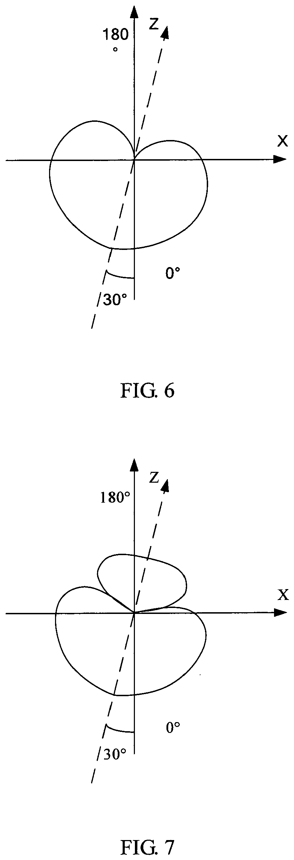

FIG. 6 is a schematic diagram of beam directionality of a first beam of an overall collecting unit including a first audio collecting unit and a second audio collecting unit after a first processing mode is used in Embodiment 3 of an audio information processing method according to the present application.

In this embodiment, a direction of a sound source is still a 0° direction of an axis Z. In FIG. 6, a direction of a beam of the overall collecting unit including the first audio collecting unit and the second audio collecting unit is still a cardioid. However, because of positions in which the first audio collecting unit and the second audio collecting unit are disposed in an electronic device, a direction of a maximum value of the cardioid cannot directly point to the direction of the sound source, but has an included angle with the direction of the sound source. In FIG. 6, the included angle is 30°. Certainly, in a practical application, a degree of the included angle is not limited to 30°, and may be another degree.

FIG. 7 is a schematic diagram of beam directionality of a second beam of an overall collecting unit including a first audio collecting unit and a second audio collecting unit after a second processing mode is used in Embodiment 3 of an audio information processing method according to the present application.

In FIG. 7, the beam directionality of the second beam is close to a super cardioid. An included angle between a direction of a maximum value of the second beam and the direction of the sound source is also 30° which is the same as the included angle between the direction of the maximum value of the first beam and the direction of the sound source.

Step 506: Synthesize, by using a preset weighting coefficient, the fourth audio information and the fifth audio information to obtain a third audio information.

The third audio information may be synthesized by using the following formula:

$$y(n) = \sum_{i=1}^{N} DMA_i(n)W(i)$$ .

y(n) denotes synthesized third audio information; $DMA_i(n)$ denotes audio information obtained after the $i^{th}$ beam is adopted for processing; W(i) is a preset weighting coefficient of the audio information obtained after the $i^{th}$ beam is processed; N denotes the number of adopted beams; and n denotes a sampling point of an input original audio signal.

In this embodiment, two processing modes are used to process audio information and the number of formed beams is 2, and therefore N=2. The preset weighting coefficient may be set according to an actual situation, and according to the beam directionality in FIG. 6 and FIG. 7, preset weighting coefficients of both the fourth audio information and the fifth audio information may be 0.5 in this embodiment. That is, the fourth audio information and the fifth audio information may be synthesized, by using the following formula, to obtain the third audio information:

$$y(n) = \sum_{i=1}^{2} 0.5 * DMA_i(n)$$ .

Step 507: Output the third audio information.

It should be noted that in this embodiment, descriptions of the first beam, the second beam, and the preset weighting coefficient are all exemplary. In a practical application, there may be multiple used processing modes, and beam directionality in each processing mode may also be arbitrary, and the preset weighting coefficient may also be arbitrary, as long as a gain, of the finally synthesized third audio information, in the direction of the sound source is greater than a gain in the opposite direction.

In conclusion, another specific method for processing, when both the first audio collecting unit and the second audio collecting unit are omnidirectional audio collecting units, the first audio information and the second audio information to obtain the third audio information is provided in this embodiment.

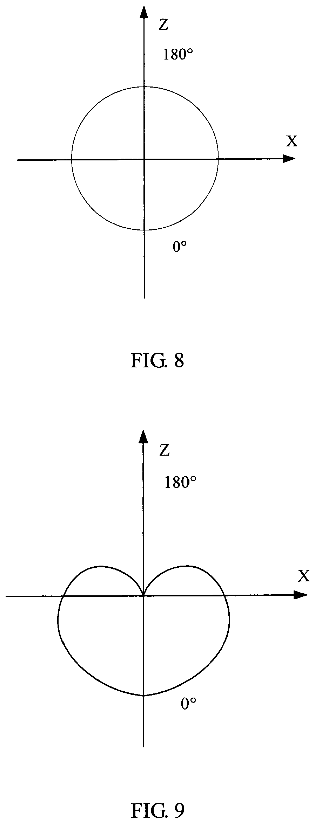

FIG. 8 is a schematic diagram of first beam directionality of a first audio collecting unit in Embodiment 4 of an audio information processing method according to the present application.

FIG. 9 is a schematic diagram of second beam directionality of a first audio collecting unit in Embodiment 4 of an audio information processing method according to the present application.

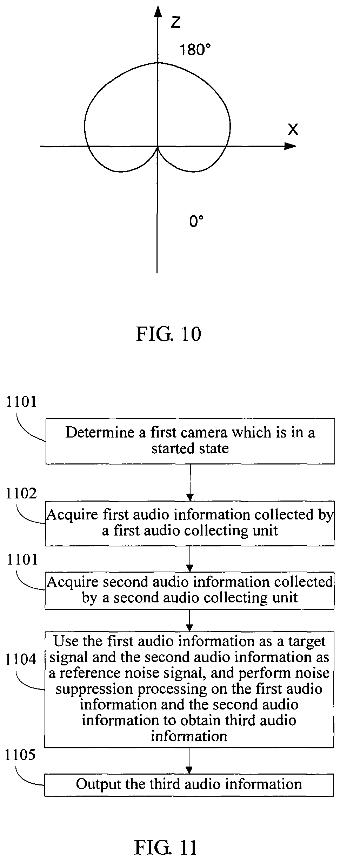

FIG. 10 is a schematic diagram of beam directionality of a second audio collecting unit in Embodiment 4 of an audio information processing method according to the present application.

As shown in FIG. 8 to FIG. 10, the first audio collecting unit is an omnidirectional audio collecting unit or a cardioid audio collecting unit, and the second audio collecting unit is a cardioid audio collecting unit.

In this embodiment, a direction of a maximum value of a cardioid of the first audio collecting unit is the same as a shooting direction, and a direction of a minimum value is the same as an opposite direction of the shooting direction; a direction of a maximum value of a cardioid of the second audio collecting unit is the same as the opposite direction of the shooting direction, and a direction of a minimum value is the same as the shooting direction.

FIG. 11 is a flowchart of Embodiment 4 of an audio information processing method according to the present application. As shown in FIG. 11, the method may include the following steps:

Step 1101: Determine the first camera which is in the started state.
Step 1102: Acquire first audio information collected by the first audio collecting unit.
Step 1103: Acquire second audio information collected by the second audio collecting unit.
Step 1104: Use the first audio information as a target signal and the second audio information as a reference noise signal, and perform noise suppression processing on the first audio information and the second audio information to obtain a third audio information.

The noise suppression processing may be a noise suppression method based on spectral subtraction. After being transformed to a frequency domain, the second audio information that is used as a reference noise signal may be directly used as a noise estimation spectrum in the spectral subtraction; or after being transformed to a frequency domain, the reference noise signal is multiplied by a preset coefficient, and then a product is used as a noise estimation spectrum in the spectral subtraction. After being transformed to the frequency domain, the first audio information that is used as a target signal is subtracted by the noise estimation spectrum to obtain a noise-suppressed signal spectrum and then after the noise-suppressed signal spectrum is transformed to a time domain, the third audio information is obtained.

The noise suppression processing may also be a noise suppression method based on an adaptive filtering algorithm. The reference noise signal is used as a noise reference channel in an adaptive filter, and noise composition of the target signal is filtered out by using an adaptive filtering method, to obtain the third audio information.

The noise suppression processing may further be as follows: After being transformed to the frequency domain, the second audio information that is used as a reference noise signal is used as minimum statistics during a noise spectrum estimation. Noise suppression gain factors on different frequencies are calculated by using a noise suppression method based on statistics; and after being transformed to the frequency domain, the first audio information that is used as a target signal is multiplied by the noise suppression gain factors so as to obtain a noise-suppressed frequency spectrum, and then after the noise-suppressed frequency spectrum is transformed to the time domain, the third audio information is obtained.

Step 1105: Output the third audio information.

In this embodiment, the second audio collecting unit itself is a cardioid, and in the cardioid, a direction of a maximum value is the same as an opposite direction of a shooting direction; therefore, for the second audio collecting unit, a gain value of audio information coming from the opposite direction of the shooting direction is the largest. In other words, the second audio collecting unit has a very high sensitivity to noise. Therefore, the first audio information may be used as a target signal and the second audio information as a reference noise signal, and the noise suppression processing is performed on the first audio information and the second audio information to obtain the third audio information, so that in synchronously output audio information, volume of a sound source in a final video image is higher than volume of noise outside the video image.

To make volume of audio information corresponding to different video images consistent with areas of the video images, in the foregoing embodiments of the present application, before the outputting the third audio information, the method may further include the following steps:

Determine a first proportion of a video image shot by the first camera in an overall video image; and adjust volume of the third audio information according to the first proportion, so as to make a proportion of the volume of the third audio information in overall volume the same as the first proportion.

The overall volume is volume when the overall video image is played.

By performing the foregoing steps, volume of an audio signal corresponding to a video image with a smaller image size can be made lower, and volume of an audio signal corresponding to a video image with a larger image size can be made higher.

The present application further provides another audio information processing method. The method is applied to an electronic device, where the electronic device has at least a front-facing camera and a rear-facing camera; a camera in a started state from the front-facing camera and the rear-facing camera is a first camera; there is at least one first audio collecting unit on one side on which the first camera is located, and there is at least one second audio collecting unit on the other side; a beam of the first audio collecting unit is a cardioid; and a direction of a maximum value of the cardioid is the same as a shooting direction, and a direction of a minimum value is the same as an opposite direction of the shooting direction.

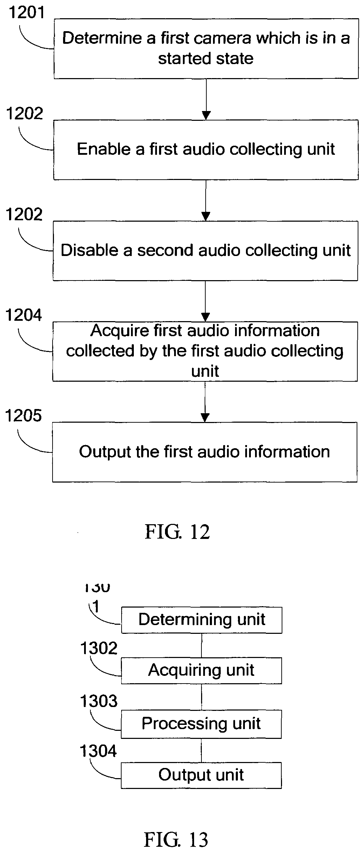

FIG. 12 is a flowchart of Embodiment 1 of another audio information processing method according to the present application. As shown in FIG. 12, the method may include the following steps:

Step 1201: Determine the first camera which is in the started state.
Step 1202: Enable the first audio collecting unit.
Step 1203: Disable the second audio collecting unit.
Step 1204: Acquire first audio information collected by the first audio collecting unit.
Step 1205: Output the first audio information.

In this embodiment, because a direction of a maximum value of a beam of the first audio collecting unit is the same as the shooting direction, for audio information directly acquired by the first audio collecting unit itself, a gain of audio information coming from the shooting direction is greater than a gain of audio information coming from the opposite direction of the shooting direction. Therefore, the first audio collecting unit may be directly used to collect audio information, and the second audio collecting unit is disabled, so that the second audio collecting unit can be prevented from collecting noise from the opposite direction. Ultimately, in synchronously output audio information, volume of a target sound source in a formed video image can also be made higher than volume of noise or an interfering sound source outside the video image.

The present application further provides an audio information processing apparatus. The apparatus is applied to an electronic device, where the electronic device has at least a front-facing camera and a rear-facing camera; a camera in a started state from the front-facing camera and the rear-facing camera is a first camera; and there is at least one first audio collecting unit on one side on which the first camera is located, and there is at least one second audio collecting unit on the other side.

The electronic device may be an electronic device such as a mobile phone, a tablet computer, a digital camera, or a digital video recorder. The camera may be the front-facing camera, and may also be the rear-facing camera. The audio collecting unit may be a microphone. The electronic device of the present application has at least two audio collecting units. The first audio collecting unit and the second audio collecting unit are separately located on two sides of the electronic device. When the first camera is the front-facing camera, the first audio collecting unit is on a side on which the front-facing camera of the electronic device is located, and the second audio collecting unit is on a side on which the rear-facing camera of the electronic device is located. When the first camera is the rear-facing camera, the first audio collecting unit is on the side on which the rear-facing camera of the electronic device is located, and the second audio collecting unit is on the side on which the front-facing camera of the electronic device is located.

FIG. 13 is a flowchart of Embodiment 1 of an audio information processing apparatus according to the present application. As shown in FIG. 13, the apparatus may include a determining unit 1301, an acquiring unit 1302, a processing unit 1303, and an output unit 1304.

The determining unit 1301 is configured to determine the first camera which is in the started state.

Generally, the camera of the electronic device is not in the started state all the time. When it is required to use the camera to shoot an image, the camera of the electronic device may be started.

When the camera is started, it may be determined, according to a signal change of a circuit of the camera, whether the camera in the started state is the front-facing camera or the rear-facing camera. Certainly, the front-facing camera and the rear-facing camera may also be in the started state at the same time.

It should be noted that a button used to indicate a state of the camera may also be specifically configured for the electronic device. After a user performs an operation on the button, it can be determined that the camera is in the started state. It should further be noted that on some special occasions, after performing an operation on the button, the user may only switch the state of the camera, and does not necessarily really start the camera at a physical level.

It should further be noted that when the electronic device has multiple cameras, the unit can determine that a camera in the started state is the first camera.

For example, the electronic device has a front-facing camera and a rear-facing camera. If the front-facing camera is in the started state, the unit can determine that the front-facing camera is the first camera, the first audio collecting unit is on a side on which the front-facing camera of the electronic device is located, and the second audio collecting unit is on a side on which the rear-facing camera of the electronic device is located. If the rear-facing camera is in the started state, the unit can determine that the front-facing camera is the first camera, the first audio collecting unit is on the side on which the rear-facing camera of the electronic device is located, and the second audio collecting unit is on the side on which the front-facing camera of the electronic device is located.

If both the front-facing camera and the rear-facing camera are in the started state, for audio information collected in real time by all audio collecting units of the electronic device, the audio information processing method of the present application may be performed by using the front-facing camera as the first camera, so as to obtain one piece of third audio information with the front-facing camera used as the first camera; meanwhile, the audio information processing method of the present application is performed by using the rear-facing camera as the first camera, so as to obtain one piece of third audio information with the rear-facing camera used as the first camera; and these two pieces of third audio information are output at the same time. When the front-facing camera is used as the first camera, the first audio collecting unit is on the side on which the front-facing camera of the electronic device is located, and the second audio collecting unit is on the side on which the rear-facing camera of the electronic device is located. When the rear-facing camera is used as the first camera, the first audio collecting unit is on the side on which the rear-facing camera of the electronic device is located, and the second audio collecting unit is on the side on which the front-facing camera of the electronic device is located.

The acquiring unit 1302 is configured to acquire first audio information collected by the first audio collecting unit, and
further configured to acquire second audio information collected by the second audio collecting unit.

When the first audio collecting unit is powered on and works properly, audio information that can be collected by the first audio collecting unit is the first audio information.

When the second audio collecting unit is powered on and works properly, audio information that can be collected by the second audio collecting unit is the second audio information.

The processing unit 1303 is configured to process the first audio information and the second audio information to obtain third audio information, where for the third audio information, a gain of a sound signal coming from a shooting direction of the first camera is a first gain; for the third audio information, a gain of a sound signal coming from an opposite direction of the shooting direction is a second gain; and the first gain is greater than the second gain.

By using a sound processing technique, different adjustments may be made to audio information from different directions, so that adjusted audio information has different gains in different directions. After being processed, audio information collected from a direction in which there is a larger gain has higher volume; and after being processed, audio information collected from a direction in which there is a smaller gain has lower volume.

When the camera is the front-facing camera, the shooting direction of the camera is a direction which the front of the electronic device faces. When the camera is the rear-facing camera, the shooting direction of the camera is a direction which the rear of the electronic device faces.

When the camera is used for shooting, audio information, such as a person's voice, that the electronic device needs to collect generally comes from a shooting range. Therefore, the gain of the sound signal coming from the shooting direction of the camera is adjusted to be the first gain with a larger gain value, which can increase volume of the audio information from the shooting range, making volume of a target speaker's voice expected to be recorded higher. In addition, the gain of the sound signal coming from the opposite direction of the shooting direction is adjusted to be the second gain with a smaller gain value, which can suppress volume of audio information from a non-shooting range, making volume of noise or an interfering sound source in a background lower.

The output unit 1304 is configured to output the third audio information.

The outputting the third audio information may be that the third audio information is output to a video file for storing, where the video file is recorded by the electronic device; and may also be that the third audio information is directly output and transmitted to an electronic device which is communicating with the electronic device for direct real-time play.

In conclusion, according to the apparatus of this embodiment, a first camera is determined; audio information collected by the first audio collecting unit and the second audio collecting unit is processed to obtain third audio information, where for the third audio information, a gain of a sound signal from a shooting direction of the camera is a first gain with a larger gain value, and a gain of a sound signal from an opposite direction of the shooting direction is a second gain with a smaller gain value, so that when an electronic device is used for video shooting and audio collecting at the same time, volume of a target sound source in a video shooting direction can be increased, and volume of noise and an interfering sound source in an opposite direction of the video shooting direction can be decreased; therefore, in synchronously output audio information, volume of a sound source in a final video image is higher than volume of noise or an interfering sound source outside the video image.

In a practical application, when both the first audio collecting unit and the second audio collecting unit are omnidirectional audio collecting units, the processing unit 1303 may be specifically configured to:

process, by using a differential array processing technique, the first audio information and the second audio information to obtain the third audio information.

After the differential array processing technique is used, a beam of an overall collecting unit including the first audio collecting unit and the second audio collecting unit is a cardioid, and

a direction of a maximum value of the cardioid is the same as the shooting direction, and a direction of a minimum value is the same as an opposite direction of the shooting direction.

In a practical application, when both the first audio collecting unit and the second audio collecting unit are omnidirectional audio collecting units, specifically, the processing unit 1303 may be further configured to:

process, in a first processing mode, the first audio information and the second audio information to obtain fourth audio information;
process, in a second processing mode, the first audio information and the second audio information to obtain fifth audio information; where
in the first processing mode, a beam of an overall collecting unit including the first audio collecting unit and the second audio collecting unit is a first beam, and
in the second processing mode, a beam of an overall collecting unit including the first audio collecting unit and the second audio collecting unit is a second beam, where the first beam and the second beam have different directions; and
synthesize, by using a preset weighting coefficient, the fourth audio information and the fifth audio information to obtain the third audio information.

In a practical application, when the first audio collecting unit is an omnidirectional audio collecting unit, and the second audio collecting unit is a cardioid audio collecting unit, where a direction of a maximum value of the cardioid is the same as the opposite direction of the shooting direction, and a direction of a minimum value is the same as the shooting direction, the processing unit 1303 may be specifically configured to:

use the first audio information as a target signal and the second audio information as a reference noise signal, and perform noise suppression processing on the first audio information and the second audio information to obtain the third audio information.

In a practical application, when the first audio collecting unit is a first cardioid audio collecting unit, and the second audio collecting unit is a second cardioid audio collecting unit, where a direction of a maximum value of the first cardioid is the same as the shooting direction, and a direction of a minimum value is the same as the opposite direction of the shooting direction; and a direction of a maximum value of the second cardioid is the same as the opposite direction of the shooting direction, and a direction of a minimum value is the same as the shooting direction, the processing unit 1303 may be specifically configured to:

use the first audio information as a target signal and the second audio information as a reference noise signal, and perform noise suppression processing on the first audio information and the second audio information to obtain the third audio information.

In a practical application, the determining unit 1301 may be further configured to:

before the third audio information is output, determine a first proportion of a video image shot by the first camera in an overall video image.

The processing unit 1303 is further configured to adjust volume of the third audio information according to the first proportion, so as to make a proportion of the volume of the third audio information in overall volume the same as the first proportion.

The overall volume is volume when the overall video image is played.

The present application further provides another audio information processing apparatus. The apparatus is applied to an electronic device, where the electronic device has at least a front-facing camera and a rear-facing camera; a camera in a started state from the front-facing camera and the rear-facing camera is a first camera; there is at least one first audio collecting unit on one side on which the first camera is located, and there is at least one second audio collecting unit on the other side; a beam of the first audio collecting unit is a cardioid; and a direction of a maximum value of the cardioid is the same as a shooting direction, and a direction of a minimum value is the same as an opposite direction of the shooting direction.

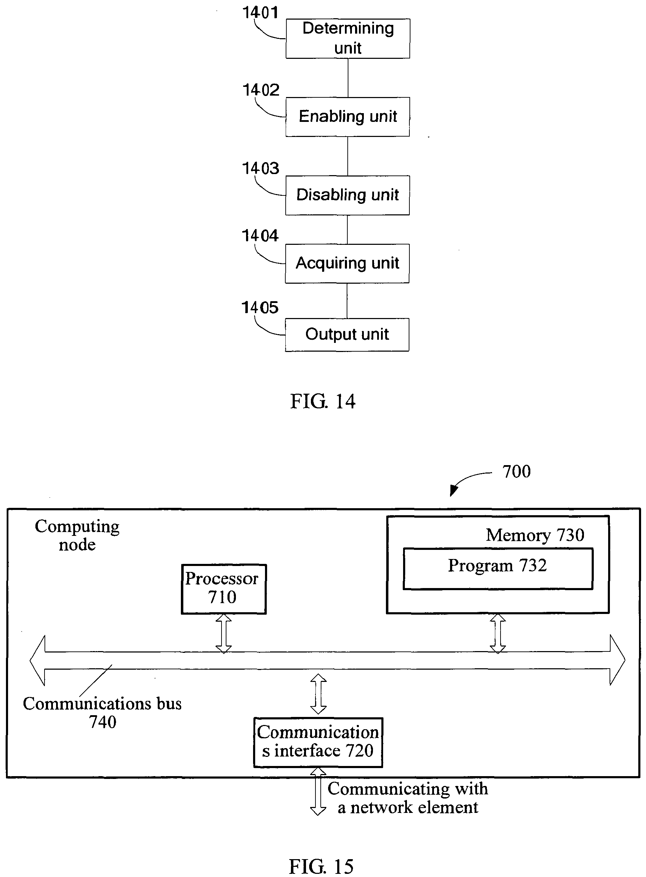

FIG. 14 is a structural diagram of Embodiment 1 of another audio information processing apparatus according to the present application. As shown in FIG. 14, the apparatus may include:

a determining unit 1401, configured to determine the first camera which is in the started state;
an enabling unit 1402, configured to enable the first audio collecting unit;
a disabling unit 1403, configured to disable the second audio collecting unit;
an acquiring unit 1404, configured to acquire first audio information collected by the first audio collecting unit; and
an output unit 1405, configured to output the first audio information.

In this embodiment, because a direction of a maximum value of a beam of the first audio collecting unit is the same as the shooting direction, for audio information directly acquired by the first audio collecting unit itself, a gain of audio information coming from the shooting direction is greater than a gain of audio information coming from the opposite direction of the shooting direction. Therefore, the first audio collecting unit may be directly used to collect audio information, and the second audio collecting unit is disabled, so that the second audio collecting unit can be prevented from collecting noise from the opposite direction. Ultimately, in synchronously output audio information, volume of a target sound source in a formed video image can be made higher than volume of noise or an interfering sound source outside the video image.

In addition, an embodiment of the present application further provides a computing node, where the computing node may be a host server that has a computing capability, a personal computer PC, a portable computer or terminal, or the like. A specific embodiment of the present application imposes no limitation on specific implementation of the computing node.

FIG. 15 is a structural diagram of a computing node according to the present application. As shown in FIG. 15, the computing node 700 includes:

a processor (processor) 710, a communications interface (Communications Interface) 720, a memory (memory) 730, and a bus 740.

The processor 710, the communications interface 720, and the memory 730 complete mutual communication by using the bus 740.

The processor 710 is configured to execute a program 732.

Specifically, the program 732 may include program code, where the program code includes a computer operation instruction.

The processor 710 may be a central processing unit CPU, or an application-specific integrated circuit ASIC (Application-Specific Integrated Circuit), or one or more integrated circuits configured to implement this embodiment of the present application.

The memory 730 is configured to store the program 732. The memory 730 may include a high-speed RAM memory, and may also include a non-volatile memory (non-volatile memory), for example, at least one disk memory.

For specific implementation of modules in the program 732, refer to corresponding modules or units in the embodiments shown in FIG. 12 and FIG. 13. Details are not repeatedly described herein.

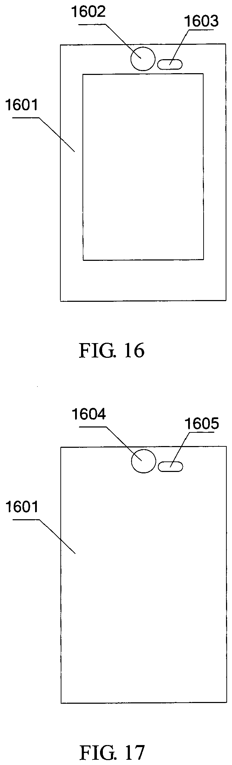

The present application further provides an electronic device. The electronic device may be a terminal such as a mobile phone. FIG. 16 is a front schematic structural diagram of an electronic device embodiment according to the present application. FIG. 17 is a rear schematic structural diagram of an electronic device embodiment according to the present application. As shown in FIG. 16 and FIG. 17, the electronic device 1601 has at least a front-facing camera 1602 and a rear-facing camera 1604; a camera in a started state from the front-facing camera 1602 and the rear-facing camera 1604 is a first camera; there is at least one audio collecting unit 1603 on a side on which the front-facing camera 1602 is located, and there is at least one audio collecting unit 1605 on a side on which the rear-facing camera 1604 is located; when the front-facing camera 1602 is the first camera, the audio collecting unit 1603 on the side on which the front-facing camera 1602 is located is configured as a first audio collecting unit, and the audio collecting unit 1605 on the side on which the rear-facing camera 1604 is located is configured as a second audio collecting unit; when the rear-facing camera 1604 is the first camera, the audio collecting unit 1605 on the side on which the rear-facing camera 1604 is located is configured as a first audio collecting unit, and the audio collecting unit 1603 on the side on which the front-facing camera 1602 is located is configured as a second audio collecting unit; and the electronic device further includes the audio information processing apparatus shown in FIG. 13 (not shown in FIG. 16 and FIG. 17).

In conclusion, according to the electronic device of the present application, a first camera is determined; audio information collected by the first audio collecting unit and the second audio collecting unit is processed to obtain third audio information, where for the third audio information, a gain of a sound signal coming from a shooting direction of the camera is a first gain with a larger gain value, and a gain of a sound signal coming from an opposite direction of the shooting direction is a second gain with a smaller gain value, so that when the electronic device is used for video shooting and audio collecting at the same time, volume of a target sound source in a video shooting direction can be increased, and volume of noise or an interfering sound source in an opposite direction of the video shooting direction can be decreased; therefore, in synchronously output audio information, volume of a sound source in a final video image is higher than volume of noise or an interfering sound source outside the video image.

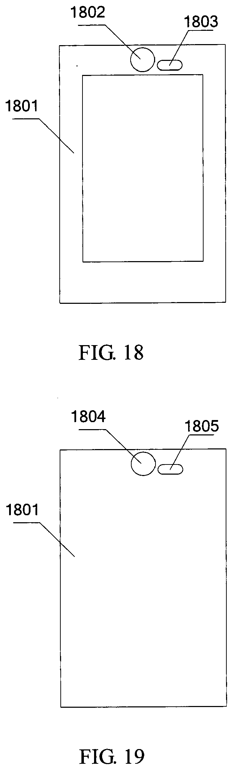

The present application further provides another electronic device. The electronic device may be a terminal such as a mobile phone. FIG. 18 is a front schematic structural diagram of an electronic device embodiment according to the present application. FIG. 19 is a rear schematic structural diagram of an electronic device embodiment according to the present application. As shown in FIG. 18 and FIG. 19, the electronic device 1801 has at least a front-facing camera 1802 and a rear-facing camera 1804; a camera in a started state from the front-facing camera 1802 and the rear-facing camera 1804 is a first camera; there is at least one audio collecting unit 1803 on a side on which the front-facing camera 1802 is located, and there is at least one audio collecting unit 1805 on a side on which the rear-facing camera 1804 is located; when the front-facing camera 1802 is the first camera, the audio collecting unit 1803 on the side on which the front-facing camera 1802 is located is configured as a first audio collecting unit, and the audio collecting unit 1805 on the side on which the rear-facing camera 1804 is located is configured as a second audio collecting unit; when the rear-facing camera 1804 is the first camera, the audio collecting unit 1805 on the side on which the rear-facing camera 1804 is located is configured as a first audio collecting unit, and the audio collecting unit 1803 on the side on which the front-facing camera 1802 is located is configured as a second audio collecting unit; and the electronic device further includes the audio information processing apparatus shown in FIG. 14 (not shown in FIG. 18 and FIG. 19).

A beam of the first audio collecting unit is a cardioid, where a direction of a maximum value of the cardioid is the same as a shooting direction, and a direction of a minimum value is the same as an opposite direction of the shooting direction.

In this embodiment, because a direction of a maximum value of a beam of the first audio collecting unit is the same as the shooting direction, for audio information directly acquired by the first audio collecting unit itself, a gain of audio information coming from the shooting direction is greater than a gain of audio information coming from the opposite direction of the shooting direction. Therefore, the first audio collecting unit may be directly used to collect audio information, and the second audio collecting unit is disabled, so that the second audio collecting unit is prevented from collecting noise from the opposite direction. Ultimately, in synchronously output audio information, volume of a target sound source in a formed video image can also be made higher than volume of noise or an interfering sound source outside the video image.

Finally, it should further be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

Based on the foregoing descriptions of the embodiments, a person skilled in the art may clearly understand that the present application may be implemented by software in addition to a necessary hardware platform or by hardware only. In most circumstances, the former is a preferred implementation manner. Based on such an understanding, all or a part of the technical solutions of the present application contributing to the technology in the background part may be implemented in the form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments of the present application.

The embodiments in this specification are all described in a progressive manner, for same or similar parts in the embodiments, reference may be made to these embodiments, and each embodiment focuses on a difference from other embodiments. The apparatus disclosed in the embodiments is described relatively simply because it corresponds to the method disclosed in the embodiments, and for portions related to those of the method, reference may be made to the description of the method.

Specific examples are used in this specification to describe the principle and implementation manners of the present application. The foregoing embodiments are merely intended to help understand the method and core idea of the present application. In addition, with respect to the implementation manners and the application scope, modifications may be made by a person of ordinary skill in the art according to the idea of the present application. Therefore, the content of this specification shall not be construed as a limitation to the present application.

**Claims**

**1.** An audio information processing method, wherein the method is applied to an electronic device; the electronic device has at least one front-facing camera being a camera provided on a same side as a display of the electronic device and one rear-facing camera provided on a side opposite to the side of the electronic device on which the display is provided; a camera in a started state, from the front-facing camera and the rear-facing camera is a first camera; there is at least one audio collecting unit on a side on which the front-facing camera is located, and there is at least one audio collecting unit on a side on which the rear-facing camera is located; when the front-facing camera is the first camera, the audio collecting unit on the side on which the front-facing camera is located is configured as a first audio collecting unit, and the audio collecting unit on the side on which the rear-facing camera is located is configured as a second audio collecting unit; when the rear-facing camera is the first camera, the audio collecting unit on the side on which the rear-facing camera is located is configured as a first audio collecting unit, and the audio collecting unit on the side on which the front-facing camera is located is configured as a second audio collecting unit; and the method comprises:

determining the first camera (step 501);
acquiring first audio information collected by the first audio collecting unit (step 502);
acquiring second audio information collected by the second audio collecting unit (step 503);
processing the first audio information and the second audio information to obtain third audio information, wherein for the third audio information, a gain of a sound signal coming from a shooting direction of the first camera is a first gain, for the third audio information, a gain of a sound signal coming from an opposite direction of the shooting direction is a second gain, and the first gain is greater than the second gain; and
outputting the third audio information (step 507), wherein both the first audio collecting unit and the second audio collecting unit are omnidirectional audio collecting units, and the processing the first audio information and the second audio information to obtain third audio information specifically comprises:

processing, in a first processing mode, the first audio information and the second audio information to obtain fourth audio information (step 504);
processing, in a second processing mode, the first audio information and the second audio information to obtain fifth audio information (step 505); wherein

in the first processing mode, a beam of an overall collecting unit comprising the first audio collecting unit and the second audio collecting unit is a first beam, and

in the second processing mode, a beam of an overall collecting unit comprising the first audio collecting unit and the second audio collecting unit is a second beam, wherein the first beam and the second beam have different directions; and

synthesizing, according to a preset weighting coefficient, the fourth audio information and the fifth audio information to obtain the third audio information (step 506).

2. An audio information processing apparatus, wherein the apparatus is applied to an electronic device; the electronic device has at least a front-facing camera being a camera provided on a same side as a display of the electronic device and a rear-facing camera provided on a side opposite to the side of the electronic device on which the display is provided; a camera in a started state, from the front-facing camera and the rear-facing camera is a first camera; there is at least one audio collecting unit on a side on which the front-facing camera is located, and there is at least one audio collecting unit on a side on which the rear-facing camera is located; when the front-facing camera is the first camera, the audio collecting unit on the side on which the front-facing camera is located is configured as a first audio collecting unit, and the audio collecting unit on the side on which the rear-facing camera is located is configured as a second audio collecting unit; when the rear-facing camera is the first camera, the audio collecting unit on the side on which the rear-facing camera is located is configured as a first audio collecting unit, and the audio collecting unit on the side on which the front-facing camera is located is configured as a second audio collecting unit; and the apparatus comprises:

a determining unit (130), configured to determine the first camera;
an acquiring unit (1302), configured to acquire first audio information collected by the first audio collecting unit; and
further configured to acquire second audio information collected by the second audio collecting unit;
a processing unit (1303), configured to process the first audio information and the second audio information to obtain third audio information, wherein for the third audio information, a gain of a sound signal coming from a shooting direction of the first camera is a first gain, for the third audio information, a gain of a sound signal coming from an opposite direction of the shooting direction is a second gain, and the first gain is greater than the second gain; and
an output unit (1304), configured to output the third audio information, wherein both the first audio collecting unit and the second audio collecting unit are omnidirectional audio collecting units, and the processing unit is specifically configured to:

process, in a first processing mode, the first audio information and the second audio information to obtain fourth audio information;
process, in a second processing mode, the first audio information and the second audio information to obtain fifth audio information; wherein
in the first processing mode, a beam of an overall collecting unit comprising the first audio collecting unit and the second audio collecting unit is a first beam, and
in the second processing mode, a beam of an overall collecting unit comprising the first audio collecting unit and the second audio collecting unit is a second beam, wherein the first beam and the second beam have different directions; and
synthesize, according to a preset weighting coefficient, the fourth audio information and the fifth audio information to obtain the third audio information.

3. An electronic device (1601), wherein the electronic device (1601) has at least a front-facing camera (1602) being a camera provided on a same side as a display of the electronic device and a rear-facing camera (1604) provided on a side opposite to the side of the electronic device on which the display is provided; a camera in a started state, from the front-facing camera (1602) and the rear-facing camera (1604) is a first camera; there is at least one audio collecting unit (1603) on a side on which the front-facing camera (1602) is located, and there is at least one audio collecting unit (1605) on a side on which the rear-facing camera (1604) is located; when the front-facing camera (1602) is the first camera, the audio collecting unit on the side on which the front-facing camera (1602) is located is configured as a first audio collecting unit, and the audio collecting unit on the side on which the rear-facing camera (1604) is located is configured as a second audio collecting unit; when the rear-facing camera (1604) is the first camera, the audio collecting unit on the side on which the rear-facing camera (1604) is located is configured as a first audio collecting unit, and the audio collecting unit on the side on which the front-facing camera (1602) is located is configured as a second audio collecting unit; and the electronic device (1601) further comprises the audio information processing apparatus according to claim 2.

**Patentansprüche**

1. Audioinformationenverarbeitungsverfahren, wobei das Verfahren auf eine elektronische Vorrichtung angewandt wird; die elektronische Vorrichtung mindestens eine nach vorne weisende Kamera, die eine Kamera ist, die auf einer gleichen Seite wie eine Anzeige der elektronischen Vorrichtung bereitgestellt wird, und eine nach hinten weisende Kamera, die auf einer Seite entgegengesetzt der Seite der elektronischen Vorrichtung bereitgestellt wird, auf der die Anzeige bereitgestellt wird, aufweist; eine Kamera in einem gestarteten Zustand, von der nach vorne weisenden Kamera und der nach hinten weisenden Kamera, eine erste Kamera ist; mindestens eine Audio erfassende Einheit auf einer Seite, auf der die nach vorne weisende Kamera angeordnet ist, vorhanden ist, und mindestens eine Audio erfassende Einheit auf einer Seite, auf der die nach hinten weisende Kamera angeordnet ist, vorhanden ist; wenn die nach vorne weisende Kamera die erste Kamera ist, die Audio erfassende Einheit auf der Seite, auf der die nach vorne weisende Kamera angeordnet ist, als eine erste Audio erfassende Einheit konfiguriert ist und die Audio erfassende Einheit auf der Seite, auf der die nach hinten weisende Kamera angeordnet ist, als eine zweite Audio erfassende Einheit konfiguriert ist; wenn die nach hinten weisende Kamera die erste Kamera ist, die Audio erfassende Einheit auf der Seite, auf der die nach hinten weisende Kamera angeordnet ist, als eine erste Audio erfassende Einheit konfiguriert ist und die Audio erfassende Einheit auf der Seite, auf der die nach vorne weisende Kamera angeordnet ist, als eine zweite Audio erfassende Einheit konfiguriert ist; und das Verfahren umfasst:

Bestimmen der ersten Kamera (Schritt 501);
Erlangen erster Audioinformationen, erfasst von der ersten Audio erfassenden Einheit (Schritt 502);
Erlangen zweiter Audioinformationen, erfasst von der zweiten Audio erfassenden Einheit (Schritt 503);
Verarbeiten der ersten Audioinformationen und der zweiten Audioinformationen, um dritte Audioinformationen zu erhalten, wobei für die dritten Audioinformationen eine Verstärkung eines Tonsignals, das aus einer Aufnahmerichtung der ersten Kamera kommt, eine erste Verstärkung ist, für die dritten Audioinformationen eine Verstärkung eines Tonsignals, das aus einer entgegengesetzten Richtung der Aufnahmerichtung kommt, eine zweite Verstärkung ist und die erste Verstärkung höher ist als die zweite Verstärkung; und
Ausgeben der dritten Audioinformationen (Schritt 507), wobei sowohl die erste Audio erfassende Einheit als auch die zweite Audio erfassende Einheit omnidirektionale Audio erfassende Einheiten sind und die Verarbeitung der ersten Audioinformationen und der zweiten Audioinformationen zum Erhalten dritter Audioinformationen spezifisch umfasst:

Verarbeiten, in einem ersten Verarbeitungsmodus, der ersten Audioinformationen und der zweiten Audioinformationen, um vierte Audioinformationen zu erhalten (Schritt 504);
Verarbeiten, in einem zweiten Verarbeitungsmodus, der ersten Audioinformationen und der zweiten Audioinformationen, um fünfte Audioinformationen zu erhalten (Schritt 505); wobei
in dem ersten Verarbeitungsmodus ein Strahl einer gesamten erfassenden Einheit, die die erste Audio erfassende Einheit und die zweite Audio erfassende Einheit umfasst, ein erster Strahl ist, und
in dem zweiten Verarbeitungsmodus ein Strahl einer gesamten erfassenden Einheit, die die erste Audio erfassende Einheit und die zweite Audio erfassende Einheit umfasst, ein zweiter Strahl ist, wobei der erste Strahl und der zweite Strahl verschiedene Richtungen aufweisen; und
Synthetisieren, gemäß einem im Voraus eingestellten Gewichtungskoeffizienten, der vierten Audioinformationen und der fünften Audioinformationen, um die dritten Audioinformationen zu erhalten (Schritt 506).

2. Audioinformationenverarbeitungsgerät, wobei das Gerät auf eine elektronische Vorrichtung angewandt wird; die elektronische Vorrichtung mindestens eine nach vorne weisende Kamera, die eine Kamera ist, die auf einer gleichen Seite wie eine Anzeige der elektronischen Vorrichtung bereitgestellt wird, und eine nach hinten weisende Kamera, die auf einer Seite entgegengesetzt der Seite der elektronischen Vorrichtung bereitgestellt wird, auf der die Anzeige bereitgestellt wird, aufweist; eine Kamera in einem gestarteten Zustand, von der nach vorne weisenden Kamera und der nach hinten weisenden Kamera, eine erste Kamera ist; mindestens eine Audio erfassende Einheit auf einer Seite, auf der die nach vorne weisende Kamera angeordnet ist, vorhanden ist, und mindestens eine Audio erfassende Einheit auf einer Seite, auf der die nach hinten weisende Kamera angeordnet ist, vorhanden ist; wenn die nach vorne weisende Kamera die erste Kamera ist, die Audio erfassende Einheit auf der Seite, auf der die nach vorne weisende Kamera angeordnet ist, als eine erste Audio erfassende Einheit konfiguriert ist und die Audio erfassende Einheit auf der Seite, auf der die nach hinten weisende Kamera angeordnet ist, als eine zweite Audio erfassende Einheit konfiguriert ist; wenn die nach hinten weisende Kamera die erste Kamera ist, die Audio erfassende Einheit auf der Seite, auf der die nach hinten weisende Kamera angeordnet ist, als eine erste Audio erfassende Einheit konfiguriert ist und die Audio erfassende Einheit auf der Seite, auf der die nach vorne weisende Kamera angeordnet ist, als eine zweite Audio erfassende Einheit konfiguriert ist; und das Gerät umfasst:

eine Bestimmungseinheit (130), konfiguriert zum Bestimmen der ersten Kamera;
eine Erlangungseinheit (1302), konfiguriert zum Erlangen erster Audioinformationen, erfasst von der ersten Audio erfassenden Einheit; und
ferner konfiguriert zum Erlangen zweiter Audioinformationen, erfasst von der zweiten Audio erfassenden Einheit;
eine Verarbeitungseinheit (1303), konfiguriert zum Verarbeiten der ersten Audioinformationen und der zweiten Audioinformationen, um dritte Audioinformationen zu erhalten, wobei für die dritten Audioinformationen eine Verstärkung eines Tonsignals, das aus einer Aufnahmerichtung der ersten Kamera kommt, eine erste Verstärkung ist, für die dritten Audioinformationen eine Verstärkung eines Tonsignals, das aus einer entgegengesetzten Richtung der Aufnahmerichtung kommt, eine zweite Verstärkung ist und die erste Verstärkung höher ist als die zweite Verstärkung; und
eine Ausgabeeinheit (1304), konfiguriert zum Ausgeben der dritten Audioinformationen, wobei sowohl die erste Audio erfassende Einheit als auch die zweite Audio erfassende Einheit omnidirektionale Audio erfassende Einheiten sind und die Verarbeitungseinheit spezifisch konfiguriert ist zum:

Verarbeiten, in einem ersten Verarbeitungsmodus, der ersten Audioinformationen und der zweiten Audioinformationen, um vierte Audioinformationen zu erhalten;
Verarbeiten, in einem zweiten Verarbeitungsmodus, der ersten Audioinformationen und der zweiten Audioinformationen, um fünfte Audioinformationen zu erhalten; wobei
in dem ersten Verarbeitungsmodus ein Strahl einer gesamten erfassenden Einheit, die die erste Audio erfassende Einheit und die zweite Audio erfassende Einheit umfasst, ein erster Strahl ist, und
in dem zweiten Verarbeitungsmodus ein Strahl einer gesamten erfassenden Einheit, die die erste Audio erfassende Einheit und die zweite Audio erfassende Einheit umfasst, ein zweiter Strahl ist, wobei der erste Strahl und der zweite Strahl verschiedene Richtungen aufweisen; und
Synthetisieren, gemäß einem im Voraus eingestellten Gewichtungskoeffizienten, der vierten Audioinformationen und der fünften Audioinformationen, um die dritten Audioinformationen zu erhalten.

3. Elektronische Vorrichtung (1601), wobei die elektronische Vorrichtung (1601) mindestens eine nach vorne weisende Kamera (1602), die eine Kamera ist, die auf einer gleichen Seite wie eine Anzeige der elektronischen Vorrichtung bereitgestellt wird, und eine nach hinten weisende Kamera (1604), die auf einer Seite entgegengesetzt der Seite der elektronischen Vorrichtung bereitgestellt wird, auf der die Anzeige bereitgestellt wird, aufweist; eine Kamera in einem gestarteten Zustand, von der nach vorne weisenden Kamera (1602) und der nach hinten weisenden Kamera (1604), eine erste Kamera ist; mindestens eine Audio erfassende Einheit (1603) auf einer Seite, auf der die nach vorne weisende Kamera (1602) angeordnet ist, vorhanden ist, und mindestens eine Audio erfassende Einheit (1605) auf einer Seite, auf der die nach hinten weisende Kamera (1604) angeordnet ist, vorhanden ist; wenn die nach vorne weisende Kamera (1602) die erste Kamera ist, die Audio erfassende Einheit auf der Seite, auf der die nach vorne weisende Kamera (1602) angeordnet ist, als eine erste Audio erfassende Einheit konfiguriert ist und die Audio erfassende Einheit auf der Seite, auf der die nach hinten weisende Kamera (1604) angeordnet ist, als eine zweite Audio erfassende Einheit konfiguriert ist; wenn die nach hinten weisende Kamera (1604) die erste Kamera ist, die Audio erfassende Einheit auf der Seite, auf der die nach hinten weisende Kamera (1604) angeordnet ist, als eine erste Audio erfassende Einheit konfiguriert ist und die Audio erfassende Einheit auf der Seite, auf der die nach vorne weisende Kamera (1602) angeordnet ist, als eine zweite Audio erfassende Einheit konfiguriert ist; und die elektronische Vorrichtung (1601) ferner das Audioinformationenverarbeitungsgerät nach Anspruch 2 umfasst.

**Revendications**

1. Procédé de traitement d'information audio, le procédé étant appliqué à un dispositif électronique ; le dispositif électronique ayant au moins une caméra orientée vers l'avant étant une caméra située sur un même côté qu'un écran du dispositif électronique, et une caméra orientée vers l'arrière située sur un côté opposé au côté du dispositif électronique où se trouve l'écran ; une caméra dans un état démarré, parmi la caméra orientée vers l'avant et la caméra orientée vers l'arrière, étant une première caméra ; au moins une unité de collecte audio étant située sur un côté où se trouve la caméra orientée vers l'avant, et au moins une unité de collecte audio étant située sur un côté où se trouve la caméra orientée vers l'arrière ;
quand la caméra orientée vers l'avant est la première caméra, l'unité de collecte audio située sur le côté où se trouve la caméra orientée vers l'avant étant configurée en tant que première unité de collecte audio, et l'unité de collecte audio située sur le côté où se trouve la caméra orientée vers l'arrière étant configurée en tant que seconde unité de collecte audio ; quand la caméra orientée vers l'arrière est la première caméra, l'unité de collecte audio située sur le côté où se trouve la caméra orientée vers l'arrière étant configurée en tant que première unité de collecte audio, et l'unité de collecte audio située sur le côté où se trouve la caméra orientée vers l'avant étant configurée en tant que seconde unité de collecte audio ; le procédé consistant à :

déterminer la première caméra (étape 501) ;
acquérir une première information audio collectée par la première unité de collecte audio (étape 502) ;
acquérir une deuxième information audio collectée par la seconde unité de collecte audio (étape 503) ;
traiter la première information audio et la deuxième information audio afin d'obtenir une troisième information audio, dont un gain d'un signal sonore provenant d'un sens de la trame de la première caméra est un premier gain, et dont un gain d'un signal sonore provenant d'une direction opposée du sens de la trame est un second gain, le premier gain étant supérieur au second gain ; et
émettre la troisième information audio (étape 507), la première unité de collecte audio et la seconde unité de collecte audio étant toutes deux des unités de collecte audio omnidirectionelles, et le traitement de la première information audio et de la deuxième information audio afin d'obtenir la troisième information audio consistant en particulier à :

traiter, dans un premier mode de traitement, la première information audio et la deuxième information audio afin d'obtenir une quatrième information audio (étape 504) ;
traiter, dans un second mode de traitement, la première information audio et la deuxième information audio afin d'obtenir une cinquième information audio (étape 505) ;
dans le premier mode de traitement, un faisceau d'une unité de collecte générale comprenant la première unité de collecte audio et la seconde unité de collecte audio étant un premier faisceau, et
dans le second mode de traitement, un faisceau d'une unité de collecte générale comprenant la première unité de collecte audio et la seconde unité de collecte audio étant un second faisceau, le premier faisceau et le second faisceau ayant des directions différentes ; et
synthétiser, selon un coefficient de pondération préréglé, la quatrième information audio et la cinquième information audio afin d'obtenir la troisième information audio (étape 506).

2. Appareil de traitement d'information audio, l'appareil étant appliqué à un dispositif électronique ; le dispositif électronique ayant au moins une caméra orientée vers l'avant étant une caméra située sur un même côté qu'un écran du dispositif électronique, et une caméra orientée vers l'arrière située sur un côté opposé au côté du dispositif électronique où se trouve l'écran ; une caméra dans un état démarré, parmi la caméra orientée vers l'avant et la caméra orientée vers l'arrière, étant une première caméra ; au moins une unité de collecte audio étant située sur un côté où se trouve la caméra orientée vers l'avant, et au moins une unité de collecte audio étant située sur un côté où se trouve la caméra orientée vers l'arrière ; quand la caméra orientée vers l'avant est la première caméra, l'unité de collecte audio située sur le côté où se trouve la caméra orientée vers l'avant étant configurée en tant que première unité de collecte audio, et l'unité de collecte audio située sur le côté où se trouve la caméra orientée vers l'arrière étant configurée en tant que seconde unité de collecte audio ; quand la caméra orientée vers l'arrière est la première caméra, l'unité de collecte audio située sur le côté où se trouve la caméra orientée vers l'arrière étant configurée en tant que première unité de collecte audio, et l'unité de collecte audio située sur le côté où se trouve la caméra orientée vers l'avant étant configurée en tant que seconde unité de collecte audio ; l'appareil comprenant :

une unité de détermination (130), conçue pour déterminer la première caméra ;
une unité d'acquisition (1302), conçue pour acquérir une première information audio collectée par la première unité de collecte audio ; et
conçue en outre pour acquérir une deuxième information audio collectée par la seconde unité de collecte audio ;
une unité de traitement (1303), conçue pour traiter la première information audio et la deuxième information audio afin d'obtenir une troisième information audio, dont un gain d'un signal sonore provenant d'un sens de la trame de la première caméra est un premier gain, et dont un gain d'un signal sonore provenant d'une direction opposée du sens de la trame est un second gain, le premier gain étant supérieur au second gain ; et
une unité d'émission (1304), conçue pour émettre la troisième information audio, la première unité de collecte audio et la seconde unité de collecte audio étant toutes deux des unités de collecte audio omnidirectionelles, et l'unité de traitement étant spécialement conçue pour :

traiter, dans un premier mode de traitement, la première information audio et la deuxième information audio afin d'obtenir une quatrième information audio ;

traiter, dans un second mode de traitement, la première information audio et la deuxième information audio afin d'obtenir une cinquième information audio ;

dans le premier mode de traitement, un faisceau d'une unité de collecte générale comprenant la première unité de collecte audio et la seconde unité de collecte audio étant un premier faisceau, et

dans le second mode de traitement, un faisceau d'une unité de collecte générale comprenant la première unité de collecte audio et la seconde unité de collecte audio étant un second faisceau, le premier faisceau et le second faisceau ayant des directions différentes ; et

synthétiser, selon un coefficient de pondération préréglé, la quatrième information audio et la cinquième information audio afin d'obtenir la troisième information audio.

3. Dispositif électronique (1601), le dispositif électronique (1601) ayant au moins une caméra orientée vers l'avant (1602) étant une caméra située sur un même côté qu'un écran du dispositif électronique, et une caméra orientée vers l'arrière (1604) située sur un côté opposé au côté du dispositif électronique où se trouve l'écran ; une caméra dans un état démarré, parmi la caméra orientée vers l'avant (1602) et la caméra orientée vers l'arrière (1604), étant une première caméra ; au moins une unité de collecte audio (1603) étant située sur un côté où se trouve la caméra orientée vers l'avant (1602), et au moins une unité de collecte audio (1605) étant située sur un côté où se trouve la caméra orientée vers l'arrière (1604) ; quand la caméra orientée vers l'avant (1602) est la première caméra, l'unité de collecte audio située sur le côté où se trouve la caméra orientée vers l'avant (1602) étant configurée en tant que première unité de collecte audio, et l'unité de collecte audio située sur le côté où se trouve la caméra orientée vers l'arrière (1604) étant configurée en tant que seconde unité de collecte audio ; quand la caméra orientée vers l'arrière (1604) est la première caméra, l'unité de collecte audio située sur le côté où se trouve la caméra orientée vers l'arrière (1604) étant configurée en tant que première unité de collecte audio, et l'unité de collecte audio située sur le côté où se trouve la caméra orientée vers l'avant (1602) étant configurée en tant que seconde unité de collecte audio ; et le dispositif électronique (1601) comprenant en outre l'appareil de traitement d'information audio selon la revendication 2.

101 — Determine a first camera which is in
a started state

102 — Acquire first audio information
collected by a first audio collecting
unit

103 — Acquire second audio information
collected by a second audio
collecting unit

104 — Process the first audio information
and the second audio information to
obtain third audio information

105 — Output the third audio information

FIG. 1

FIG. 2

301 Determine a first camera which is in a started state

302 Acquire first audio information collected by a first audio collecting unit

303 Acquire second audio information collected by a second audio collecting unit

304 Process, by using a differential array processing technique, the first audio information and the second audio information to obtain third audio information

305 Output the third audio information

FIG. 3

FIG. 4

501 — Determine a first camera which is in a started state

502 — Acquire first audio information collected by a first audio collecting unit

503 — Acquire second audio information collected by a second audio collecting unit

504 — Process, in a first processing mode, the first audio information and the second audio information to obtain fourth audio information

505 — Process, in a second processing mode, the first audio information and the second audio information to obtain fifth audio information

506 — Synthesize, by using a preset weighting coefficient, the fourth audio information and the fifth audio information to obtain third audio information

507 — Output the third audio information

FIG. 5

FIG. 6

FIG. 7

FIG. 8

FIG. 9

Z

180°

X

0°

FIG. 10

1101

Determine a first camera which is in a
started state

1102

Acquire first audio information collected by
a first audio collecting unit

1101

Acquire second audio information collected
by a second audio collecting unit

1104

Use the first audio information as a target
signal and the second audio information as
a reference noise signal, and perform noise
suppression processing on the first audio
information and the second audio
information to obtain third audio
information

1105

Output the third audio information

FIG. 11

1201 — Determine a first camera which is in a started state

1202 — Enable a first audio collecting unit

1202 — Disable a second audio collecting unit

1204 — Acquire first audio information collected by the first audio collecting unit

1205 — Output the first audio information

FIG. 12

130

1 — Determining unit

1302 — Acquiring unit

1303 — Processing unit

1304 — Output unit

FIG. 13

1401 — Determining unit

1402 — Enabling unit

1403 — Disabling unit

1404 — Acquiring unit

1405 — Output unit

FIG. 14

700

Computing node

Processor 710

Memory 730

Program 732

Communications bus 740

Communications interface 720

Communicating with a network element

FIG. 15

FIG. 16

FIG. 17

1802    1803

1801

FIG. 18

1804    1805

1801

FIG. 19

**EP 2 882 170 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120062729 A1
- US 20110164105 A1
- US 20110317041 A1